# EUROPÄISCHE PATENTSCHRIFT

(11) **EP 0 401 576 B1**
(45) Veröffentlichungstag und Bekanntmachung des Hinweises auf die Patenterteilung: **14.07.1993**
(21) Anmeldenummer: 90109506.7
(22) Anmeldetag: 18.05.1990
(51) Int. Cl.: G01B 9/02

(54) **Interferometeranordnung**
Interferometric device
Dispositif interférométrique

(30) Priorität: 07.06.1989 AT 1394/89; 06.09.1989 AT 2083/89
(43) Veröffentlichungstag der Anmeldung: 12.12.1990
(73) Patentinhaber: Tabarelli, Werner, Dr., 9494 Schaan (LI)
(72) Erfinder: Leuchs, Gerhard, CH-9478 Azmoos (CH); Kerner, Martin, CH-3116 Kirchdorf (CH)
(74) Vertreter: Hofinger, Engelbert, DDr.

(56) Entgegenhaltungen:
- EP-A- 0 260 894
- WO-A-88/06711
- WO-A-88/08959
- DE-A- 3 918 812
- GB-A- 2 136 952

## Beschreibung

Die vorliegende Erfindung betrifft eine Interferometeranordnung, insbesondere zur Entfernungs- bzw. Verschiebewegbestimmung eines beweglichen Bauteiles, mit einer Laserlichtquelle mit zumindest einem Strahlteiler zur Aufteilung von aus der Laserlichtquelle stammendem Licht in einen Meßstrahl und einen Referenzstrahl, mit einer Rekombinationseinrichtung, an der der über Referenzstrecke geführte Referenzstrahl und der eine teilweise in einem gasförmigen Umgebungsmedium verlaufende und über einen beweglichen Meßspiegel führende Meßstrecke durchlaufende Meßstrahl interferieren, und mit einer wenigstens einen Photodetektor aufweisenden Detektoreinrichtung zur Analyse zumindest eines aus der Rekombinationseinrichtung stammenden optischen Interferenzsignals, wobei die Interferometeranordnung zur Erfassung bzw. Kompensation von variablen Umweltbedingungen mindestens ein statisches, über einen Lichtwellenleiter mit Licht aus der Laserlichtquelle beleuchtetes Etalon bekannter Länge aufweist, dessen zwischen den Reflexionsflächen liegender Raumbereich mit dem Umgebungsmedium kommuniziert.

Bei einer solchen Interferometeranordnung, bei der der Meßstrahl über eine im Umgebungsmedium (meist Luft) verlaufende Meßstrecke geführt wird, liegt das interferometrische Meßergebnis zunächst in Einheiten der in diesem Umgebungsmedium vorhandenen Lichtwellenlängen (im folgenden kurz Luftwellenlänge genannt) vor. Um beispielsweise den Verschiebeweg eines Meßspiegels in metrischen Einheiten zu kennen, muß die von der Emissionsfrequenz der Laserlichtquelle und von der Brechzahl des Umgebungsmediums abhängende Luftwellenlänge hinreichend genau bekannt sein. Bei bekannter Emissionsfrequenz besteht die Möglichkeit, Druck, Temperatur und Feuchte des Umgebungsmediums zu erfassen und daraus nach einem formelmäßigen Zusammenhang die Brechzahl zu errechnen. Nachteilig an diesem sogenannten Parameterverfahren ist die Tatsache, daß einerseits die Emissionsfrequenz genauestens bekannt sein muß und daß neben Temperatur, Druck und Feuchte auch andere Parameter, wie beispielsweise die Gaszusammensetzung der Luft, in die Brechzahl und damit in die Luftwellenlänge eingehen.

Durch einen interferometrischen Vergleich der Luftwellenlänge mit einer Maßverkörperung bekannter Länge ist man prinzipiell in der Lage, die Luftwellenlänge direkt zu bestimmen. Als statische Maßverkörperungen eignen sich sogenannte Etalons (Endmaße) mit zwei in bekanntem Nominal-Abstand zueinander angeordneten Reflexionsflächen, wobei das Etalon "offen" ist, d.h. der zwischen den Reflexionsflächen liegende Raumbereich mit dem Umgebungsmedium kommuniziert. Bei der Verwendung derartiger Etalone zur Erfassung bzw. Kompensation von variablen Umweltbedingungen (Brechzahl des Umgebungsmediums) treten zwei verschiedenartige Schwierigkeiten auf. Zunächst muß sichergestellt sein, daß sich zwischen den Reflexionsflächen des Etalons (bzw. bei mehreren Etalonen zwischen den Reflexionsflächen jedes Etalons) tatsächlich dieselben Umweltbedingungen herrschen wie auf der Meßstrecke. Bei bisher bekannten Einrichtungen wurde das Etalon häufig in der Nähe der diskret aufgebauten übrigen optischen Komponenten der Interferometeranordnung angeordnet, wodurch insbesondere die Gefahr eines Temperatur- und Feuchteunterschiedes zwischen dem Umgebungsmedium im Etalon und dem auf der Meßstrecke besteht, womit eine Verfälschung des Meßergebnisses verbunden ist.

Ein weiteres Problem bei der Verwendung von einem oder mehreren Etalonen zur Erfassung bzw. Kompensation von Umweltbedingungen besteht in der Empfindlichkeit gegenüber der Winkeljustierung. Der das Interferenzsignal bestimmende optische Gangunterschied hängt nicht nur, wie gewünscht, von der Länge des Etalons (Abstand der beiden Reflexionsflächen) ab, sondern auch vom Winkel, unter dem die Lichtstrahlen durch das Interferometer treten. Der zulässige Winkelfehler hängt von der angestrebten Genauigkeit der Intferometeranordnung und der Etalonlänge ab. Für eine typische Etalonlänge von etwa einem Zentimeter und einer relativen Luftwellenlängengenauigkeit von 10⁻⁷ ergibt sich beispielsweise ein maximal zulässiger Winkelfehler von 15 Bogenminuten (kollinear beleuchtetes Etalon) bzw. von wenigen Bogensekunden (divergent beleuchtetes Etalon). In jedem Fall ist die Forderung an die Winkelgenauigkeit im praktischen Einsatz mit einem Interferometer in herkömmlicher Bauweise nur schwer erfüllbar.

Es ist weiters bereits ein Interferometer bekannt (DE-OS 37 15 627), das auf einem plattenförmigen Trägersubstrat integrierte Lichtwellenleiter aufweist. An das Trägersubstrat ist eine luftgefüllte Einrichtung angeschlossen, die zusammen mit der Außenfläche des Trägersubstrates eine Art Etalon bildet, welches zur Kompensation von Umweltbedingungen prinzipiell geeignet ist. Allerdings liegt dieses "Etalon" räumlich starr an einer der Meßstrecke abgewandten Stelle seitlich am Trägersubstrat fest, womit nicht sichergestellt ist, daß im "Etalon" und auf der Meßstrecke dieselben Umweltbedingungen (insbesondere Temperatur und Feuchte) herrschen. Für präzise Meßergebnisse ist dies aber eine notwendige Voraussetzung.

Die WO-A- 8806711 zeigt ein Interferometer zur Längenmessung mit einem Referenzinterferometer zur Kompensation bzw. Erfassung von schwankenden Umweltbedingungen (Brechzahlen der Luft). Das Referenzinterferometer ist aus diskreten optischen Elementen aufgebaut und knapp seitlich neben der eigentlichen Meßstrecke angeordnet. Prinzipiell ist damit die Brechzahl der Luft erfaßbar, und entsprechende Kompensationen sind möglich. In der Praxis ergeben sich bei der Einrichtung der WO-A- 8806711 jedoch Probleme, da das seitlich neben dem eigentlichen Meßinterferometer angeordnete Referenzinterferometer Platz-beansprucht. Weiters ist neben der Justierung des eigentlichen Interferometers auch noch eine Justierung der diskreten optischen Komponenten des Referenzinterferometers nötig, was vor-allem bei der industriellen Anwendung Probleme bereitet.

Aufgabe der Erfindung ist es, eine kompakte, einfach handzuhabende und insbesondere für die industrielle Wegmessung geeignete Interferometeranordnung der eingangs genannten Gattung zu schaffen, die mit einem oder mehreren Etalons eine präzise Erfassung bzw. Kompensation der auf der Meßstrecke herrschenden, variablen Umweltbedingungen ermöglicht, wobei die auf der Meßstrecke tatsächlich vorliegende Luftwellenlänge genau ermittelbar sein soll.

Dies wird erfindungsgemäß dadurch erreicht, daß der Lichtwellenleiter, an den das bzw. die Etalon(e) angeschlossen ist bzw. sind, eine Licht aus der Laserlichtquelle führende, flexible Lichtleitfaser ist.

Durch den Etalonanschluß an eine flexible Lichtleitfaser ist es ohne aufwendig zu justierende optische Bauteile einfach möglich, das Etalon im Bereich bzw. in der Nähe der Meßstrecke anzuordnen, womit sichergestellt ist, daß zwischen den Reflexionsflächen des bzw. der Etalone tatsächlich die gleichen Umweltbedingungen herrschen wie auf der Meßstrecke.

Im wesentlichen gleich sind Mediumsbedingungen, bei denen die zugehörige relative Brechzahldifferenz jedenfalls kleiner oder gleich der geforderten Meßgenauigkeit für die Lageänderung des beweglichen Bauteiles liegt. Soll z.B. die Meßunsicherheit bei einer Verschiebestrecke von 1 m kleiner als 0,1 µm sein, so muß die genannte relative Brechzahldifferenz Δn/n <10⁻⁷ sein, damit die Mediumsbedingungen als im wesentlichen gleich angesehen werden können.

Kommt es nun zu Änderungen bei Druck, Temperatur, Feuchtigkeit bzw. überhaupt Zusammensetzung des Mediums auf der Meßstrecke, so kann es unerwünscht sein, wenn abgewartet werden muß, bis Diffusionsvorgänge im Etalon die "gleichen" Bedingungen hergestellt haben. Vorzugsweise ist daher vorgesehen, daß jedes Etalon mit zwei Öffnungen versehen ist und ein Ventilator eine Strömung durch das Etalon bzw. die Etalone erzeugt.

In der Praxis wird man das zum Etalon weisende Faserende in einer vorzugsweise einstellbaren Haltevorrichtung relativ zu den Reflexionsflächen des Etalons justiert halten. Damit kann die eingangs erwähnte Empfindlichkeit gegenüber Winkeljustierungen des Etalons beseitigt werden, wobei diese präzise Justierung unabhängig von der genauen Lage des Etalons immer aufrechterhalten ist. Man braucht das Etalon also nicht in Relation zu anderen diskret aufgebauten optischen Komponenten auszurichten, sondern hat die Freiheit, es an einer günstigen Stelle in der Nähe der Meßstrecke anzuordnen. Dies stellt für die praktische Anwendung einen erheblichen Vorteil dar.

Gemäß einer bevorzugten Ausführungsform der Erfindung ist vorgesehen, daß die flexible Lichtleitfaser, an die das bzw. die Etalone angeschlossen ist (sind), ein Einmodenwellenleiter, vorzugsweise eine monomode Glasfaser ist. Bei einer kollinearen Beleuchtung des Etalons, bei der zwischen dem etalonseitigen Ende der Lichtleitfaser und der einen der beiden Reflexionsflächen des Etalons eine Kollimationslinse angeordnet ist, aus der die Lichtstrahlen parallel zueinander und senkrecht auf die parallelen Reflexionsflächen in den zwischen diesen liegenden Raumbereich des Etalons eintreten, kommt bei der Verwendung eines Einmodenwellenleiters insbesondere der Effekt zum Tragen, daß im Einmodenwellenleiter wohldefinierte Wellenfronten vorliegen, die nach Abbildung durch eine entsprechend genaue Kollimationslinse optimale Wellenfronten für die kollineare Beleuchtung des Etalons erlauben.

Bei einer divergenten Beleuchtung des Etalons, bei der das räumliche Interferenzringmuster ausgewertet wird, hängt die Lage der Interferenzringe im Prinzip nicht von der Lage der divergenten Lichtquelle ab, sondern nur von der räumlichen Lage und Orientierung des Etalons und der das Interferenzringsystem erzeugenden Linse hinter dem Etalon. Um ein gleichmäßig ausgeleuchtetes Ringsystem zu erhalten, kommt es darauf an, daß dem Etalon gleichmäßig Licht unter allen Winkeln angeboten wird. Bisher hat man versucht dieses gleichmäßige Angebot dadurch zu erreichen, daß der zu untersuchende Lichtstrahl durch eine Linse divergent gemacht wird. Für Präzisionsmessungen am räumlichen Interferenzringsystem muß aber sowohl die Linse als auch die Wellenfront des Lichtstrahles eine sehr hohe Qualität haben. Ansonsten wird das Interferenzringsystem nicht gleichmäßig beleuchtet, was die Auswertung verfälscht. Aus diesem Grund hat man auch versucht, das Etalon über eine Mattglasscheibe zu beleuchten, die das Licht völlig diffus macht, bevor es in das Etalon eintritt. Bei einer mit kohärentem Laserlicht beleuchteten Mattscheibe ergibt sich allerdings in der Brennebene der das Interferenzringsystem scharf abbildenden Linse ein unregelmäßiges Speckle-Muster, das sich dem Ringsystem überlagert und das eine präzise Auswertung der Lage der Interferenzringe unmöglich macht. Die genannten Probleme werden gemäß einer bevorzugten Ausführungsform der Erfindung dadurch gelöst, daß das Etalon über eine monomode Lichtleitfaser beleuchtet wird, die in einem festen bzw. fest einstellbaren Abstand vor der einen Reflexionsfläche des Etalons endet, wobei der aus der monomoden Lichtleitfaser divergent austretende Lichtkegel das Etalon beleuchtet. Das Ende des Einmodenwellenleiters (beispielsweise monomode Glasfaser) stellt eine perfekte Punktlichtquelle dar. Auf diese Weise erreicht man mit einfachen Mitteln ein präzises, gleichmäßig ausgeleuchtetes Interferenzringsystem.

Die Interferenzen gleicher Neigung, welche durch die dem Ende der monomoden Lichtleitfaser abgewandten, teilreflektierenden Reflexionsfläche austreten, werden hinter dieser Reflexionsfläche durch eine Sammellinse abgebildet, in deren Brennebene vorzugsweise radial außerhalb der optischen Achse eine das Interferenzringsystem erfassende Photodetektoreinheit angeordnet ist.

Um die variablen Umweltbedingungen zu kompensieren, ist gemäß einer bevorzugten Ausführungsform der Erfindung vorgesehen, daß die Frequenz der Laserlichtquelle in Abhängigkeit von der Brechzahl des zwischen den Reflexionsflächen des Etalons bzw. der Etalone befindlichen Umgebungsmediums derart verändert wird, daß die im Umgebungsmedium vorhandene Wellenlänge konstant bleibt. Diese Konstanthaltung der Luftwellenlänge erlaubt eine einfachere Auswertung der vom Etalon erzeugten Interferenzsignale, da es lediglich darauf ankommt, dieses Interferenzsignal konstant zu halten, was im Falle eines divergent beleuchteten Etalons, beispielsweise durch eine Differentialdiode möglich ist, die einen Ring des Interferenzringsystems erfaßt. In Abhängigkeit von den Signalen aus der Differentialdiode kann dann eine elektronische Regeleinheit die Frequenz der Laserlichtquelle derart verstellen, daß der erfaßte Intferferenzring immer genau in der Mitte der Differentialdiode steht, womit die Luftwellenlänge konstant gehalten ist.

Verwendet man gemäß einer bevorzugten Ausführungsform der Erfindung eine Laserdiode als Lichtquelle, in deren Laserresonator Licht aus dem günstigerweise kollinear beleuchteten Etalon frequenzselektiv zurückgekoppelt wird, so kann man die Eigenschaft von Laserdioden, auf zurückgekoppeltes Licht in der Emissionsfrequenz zu reagieren, vorteilhaft ausnutzen. Die vom Etalon bevorzugt in den Laserresonator der Laserdiode bevorzugt zurückgekoppelte Frequenz veranlaßt die Emissionsfrequenz der Laserdiode innerhalb eines bestimmten Bereiches auf diese Frequenz einzurasten. Die genannte Regelung der Laserdiode über die optische Rückkopplung kann durch eine elektronische Regelung unterstützt sein, die in Abhängigkeit von der vom Etalon erfaßten Luftwellenlänge, die die Emissionswellenlänge der Laserdiode mitbestimmenden Betriebsparameter (Injektionsstrom, Betriebstemperatur) regelt.

Um die Handhabung des bzw. der Etalone zu erleichtern ist es günstig, wenn das dem Etalon abgewandte Ende der Lichtleitfaser über einen Faserverbinder mit einer Licht aus der Laserlichtquelle führenden Lichtleitfaser lösbar verbunden ist. Diese Verbindungsstelle kann beispielsweise an einem Gehäuse angebracht sein, in dem die Laserdiode und/oder die Auswertelektronik untergebracht ist. Das Etalon braucht dann nurmehr "angesteckt" werden. Um eine Anpassung der zum Etalon führenden Glasfaserlänge vom Bereich der Meßstrecke bis zur Lichtquelle zu erreichen, ist es gemäß einer bevorzugten Ausführungsform günstig, wenn zwischen der am Etalon angeschlossenen Lichtleitfaser und der Laserlichtleitquelle eine weitere Lichtleitfaser angeordnet ist, deren lichtquellenseitiges Ende über einen ersten Faserverbinder einer von der Laserlichtquelle kommenden Lichtleitfaser lösbar verbunden ist und deren etalonseitiges Ende über einen zweiten Faserverbinder mit der am Etalon angeschlossenen Lichtleitfaser lösbar verbunden ist. Über diese weitere Lichtleitfaser ist eine leichte Anpassung der Glasfaserlänge an die jeweiligen räumlichen Gegebenheiten sowie eine einfache Verlegung der Glasfaser leicht möglich.

Gemäß einer bevorzugten Ausführungsform der Erfindung ist vorgesehen, daß die gesamte optische Länge der zwischen Etalon und Lichtquelle liegenden Lichtleitfasern mindestens ein Meter, vorzugsweise mindestens zehn Meter beträgt. Mit diesem Merkmal wird verhindert, daß es aus dem zwischen der Lichtquelle und der ersten reflektierenden Fläche des Etalons gebildeten "Quasietalon" zu störenden Rückkopplungen in die Laserlichtquelle kommt. Durch die große optische Länge der Lichtleitfaser, welche man am günstigsten durch eine entsprechend lange weitere Lichtleitfaser erzielt, rücken die Reflexionsmaxima aus dem "Quasietalon" so nahe zusammen, daß es sich im Rahmen der geforderten Wellenlängengenauigkeit um eine quasi kontinuierliche Rückkopplung handelt, die die Emissionsfrequenz der Laserlichtquelle, insbesondere einer auf Rückkopplungen sensitiven Laserdiode im Rahmen der geforderten Längenwellengenauigkeit nicht beeinflußt.

Sollte es nicht möglich sein, daß aus einem relativ kurzen (Abstand der Reflexionsflächen im Bereich von einigen Millimetern) stammende Interferenzsignal (beispielsweise die Lage eines Interferenzringes) mit der erforderlichen Genauigkeit zu messen bzw. konstant zu halten, so kann ein zweites, etwa 10 bis 30 x längeres Etalon eingesetzt werden (Stufenetalon), das eine genauere Auswertung des Interferenzmusters erlaubt.

Weitere Vorteile und Einzelheiten der Erfindung werden in der folgenden Figurenbeschreibung näher erläutert.

Es zeigen die Fig. 1 eine schematische Darstellung eines Ausführungsbeispiels der erfindungsgemäßen Interferometeranordnung, bei der ein Teil des zum bzw. vom Interferometerkopf führenden Lichtleitfaserkabels vergrößert dargestellt ist, die Fig. 2 ein Ausführungsbeispiel eines an eine Glasfaser angeschlossenen, kollinear beleuchteten Etalons, die Fig. 3 eine schematische Darstellung einer Anordnung zur Auswertung des aus einem kollinear beleuchteten Etalon stammenden Intfererenzsignals die Fig. 4 eine schematische Darstellung eines aus zwei Etalons verschiedener Länge bestehenden Stufenetalons und Fig. 5 ein weiteres, schematisch dargestelltes Ausführungsbeispiel, Fig. 5a eine gekapselte Variante der Ausführung nach Fig. 5.

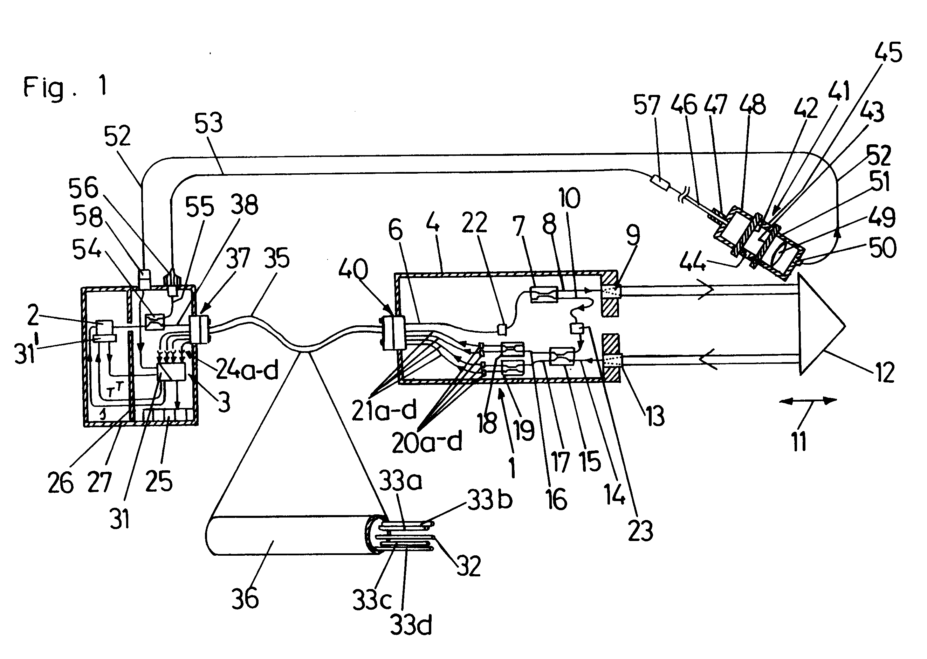

Die in Fig. 1 dargestellte Interferometeranordnung weist einen Interferometerkopf 1, eine Laserdiode 2 zur Versorgung des Interferometerkopfs 1 mit Laserlicht und eine Detektoreinrichtung 3 zur Auswertung der aus dem Interferometerkopf stammenden Interferenzsignale auf. Der Interferometerkopf 1 ist von einem Gehäuse 4 umgeben und enthält in seinem Inneren mehrere, durch monomode Glasfasern verbundene optische Komponenten, die im folgenden näher beschrieben werden. Das in der Lichtleitfaser 6 herangeführte Laserlicht aus der Laserdiode 2 gelangt zu einem Strahlteiler 7, der eine Aufteilung in Meß- und Referenzstrahl vornimmt. Der Meßstrahl wird über die Glasfaser 8 und die Auskoppellinse 9 (Gradientenindexlinse) auf die außerhalb des Interferometerkopfs liegende, im Umgebungsmedium verlaufende Meßstrecke geführt. Der Referenzstrahl verläuft in der Referenzfaser 10 im Interferometerkopf 1. An einem in Richtung des Doppelpfeiles 11 verschieblichen (nicht dargestellten) Bauteil ist der Retroreflektor 12 befestigt. Dieser Retroreflektor 12 reflektiert den Meßstrahl mit Strahlversatz zum Interferometerkopf 1 zurück. Über eine gesonderte Einkoppellinse 13 gelangt der Meßstrahl in die Glasfaser 14. In der als Faserkoppler ausgeführten Rekombinationseinrichtung 15 werden der von der Meßstrecke zurückkehrende Meßstrahl und der in der Referenzfaser 10 geführte Referenzstrahl Interferenz gebracht. Zwei weitere Strahlteiler 18 und 19 sind an die beiden komplementären Ausgänge 16 und 17 der Rekombinationseinrichtung 15 angeschlossen. Über Polarisationsfilter 20a bis d gelangen die phasenverschobenen Interferenzsignale in die zur Detektoreinrichtung 3 führenden Lichtleitfasern 21a bis d . Aus den vier jeweils um 90° gegeneinander phasenverschobenen Interferenzsignalen lassen sich in bekannter Weise neben dem Verschiebeweg des Retroreflektors 12 auch die Verschieberichtung und der Modulationshub des Interferenzsignals ermitteln. Die dargestellte Interferometeranordnung ist also mit zwei senkrecht aufeinanderstehenden Polarisationen betrieben. Dazu ist ein Polarisator 22 vorgesehen, um aus dem linearpolarisierten Licht der Laserdiode Licht mit zwei senkrecht aufeinanderstehenden Polarisationen zu erzeugen. Beide Polarisationsanteile durchlaufen dieselbe Meßstrecke. Im Referenzzweig 10 ist ein λ/4-Plättchen angeordnet, um eine Polarisationsrichtung gegenüber der anderen um 90° in der Phase zu verschieben.

Die Detektoreinrichtung 3 weist vier Photodetektoren 24a-d auf. Diese vier Photodetektoren 24a - d erzeugen aus den optischen Interferenzsignalen elektrische Interferenzsignale, die von einer Elektronikeinheit ausgewertet werden. Das Ergebnis (die Lage des Retroreflektors 12) wird über eine Anzeige 25 angezeigt.

Die Laserdiode 2 befindet sich in einem durch die wärmeisolierende Dämmwand 26 abgeteilten Gehäusebereich des Lichtquellen- und Auswertgehäuses 27.

Zur im folgenden näher beschriebenen Kompensation von variablen Umweltbedingungen (Schwankungen der Brechzahl des Umgebungsmediums auf der Meßstrecke) ist ein statisches Etalon 41 vorgesehen, zwischen dessen teildurchlässigen Reflexionsflächen 42 und 43 ein Raumbereich liegt, der über die Öffnung 44 mit dem Umgebungsmedium kommuniziert. Die Länge des Etalons 41 (Abstand der parallelen teildurchlässigen Reflexionsflächen 42 und 43) ist bekannt und beträgt typischerweise einige Millimeter. Ein Ring 45 mit vernachlässibar kleinem Wärmeausdehnungskoeffizienten (beispielsweise aus Glaskeramik)hält die beiden Reflexionsflächen 42 und 43 in dem gewünschten bekannten Abstand. Erfindungsgemäß ist das Etalon an eine Licht aus der Laserdiode 2 führende, flexible Lichtleitfaser 46 angeschlossen, die bis auf dem Bereich ganz am Etalon 41 (wie alle anderen Lichtleitfasern) durch eine einfache Linie dargestellt ist. Diese Lichtleitfaser 46 erlaubt es, das Etalon an einer günstigen Stelle und Lage im Bereich der Meßstrecke ohne aufwendig zu justierende optische Bauteile anzuordnen. Damit ist sichergestellt, daß auf der Meßstrecke, entlang der sich der Retroreflektor 12 bewegt, und zwischen den Reflexionsflächen 42 und 43 des Etalons tatsächlich dieselben Umweltbedingungen (Brechzahl) herrschen.

Um eine einwandfreie Justierung des Glasfaserendes bezüglich der Reflexionsflächen 42 und 43 zu erzielen, ist dieses Ende von einer an einem Abstandhalter 48 angebrachten ringförmigen Haltevorrichtung 47 gehalten. Damit ist die erforderliche Winkelgenauigkeit in der optischen Strahlführung ständig gewährleistet.

Im vorliegenden Ausführungsbeispiel ist die Lichtleitfaser 46 eine monomode Glasfaser, deren Ende eine ideale Punktlichtquelle darstellt. Damit ergibt sich hinter der Reflexionsfläche 43 ein durch die Linse 49 abgebildetes, präzises, gleichmäßig ausgeleuchtetes Interferenzringsystem. Eine Differentialdiode 50, die wie die Linse an einem Halter 51 befestigt ist, erfaßt einen Interferenzring des Interferenzringsystems und gibt in Abhängigkeit von der Lage des Interferenzringes über die mittels der Stecker 58 angesteckte elektrische Leitung 52 ein Signal an die Laserdioden-Regeleinheit 31 ab.

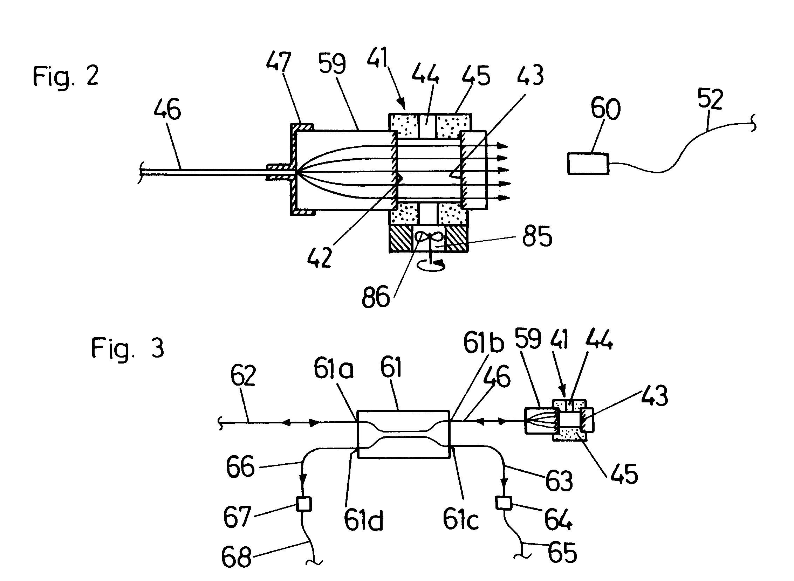

Die Emissionsfrequenz der Laserdiode 2 wird einerseits über Injektionsstrom und Temperatur und andererseits durch frequenzselektive optische Rückkopplung aus dem Etalon 41 im Interferometerkopf 1 geregelt. Zwischen den beiden etwa 5 mm beabstandeten Reflexionsflächen 42, 43 des Etalons 41 befindet sich das auf der Meßstrecke vorhandene Umgebungsmedium Verändert sich die Brechzahl des Umgebungsmediums und damit die Luftwellenlänge im Etalon 41, so verändert sich auch die Lage des von der Differentialdiode 50 erfaßten Interferenzrings. Die Regeleinheit 31 korrigiert daraufhin über Injektionsstrom I und Laserdiodentemperatur T (Peltier-Element 31') die Betriebsparameter der Laserdiode derart, daß sich die Emissionsfrequenz gerade so ändert, daß die auf der Meßstrecke (und im Etalon 41) vorhandene Luftwellenlänge konstant bleibt. Zusätzlich zu dieser elektronischen Regelung der Emissionsfrequenz erfolgt eine optische Regelung der Laserdiode dadurch, daß in Abhängigkeit von der Brechzahl des Umgebungsmediums zwischen den Spiegelflächen des Etalons 41 Licht frequenzselektiv in die Laserdiode zurückgekoppelt wird, das die Laserdiode dazu veranlaßt, bevorzugt auf dieser Frequenz zu emittieren. Zum Erhalt eines solchen optischen Rückkopplungssignals scheint allerdings das in Fig. 2 erläuterte kollinear beleuchtete Etalon günstiger zu sein.

Gemäß einer bevorzugten Ausführungsform der Erfindung ist zwischen der am Etalon angeschlossenen Lichtleitfaser 46 und der über den Strahlteiler 54 mit Laserlicht versorgten Lichtleitfaser 55 eine weitere Lichtleitfaser 53 angeordnet, deren lichtquellenseitiges Ende über einen ersten Faserverbinder 56 am Gehäuse 27 mit der Lichtleitfaser 55 lösbar verbunden ist und deren etalonseitiges Ende mit der am Etalon 41 angeschlossenen Lichtleitfaser 46 lösbar verbunden ist. Diese weitere Lichtleitfaser läßt sich leicht verlegen, in ihrer Länge an die jeweiligen Gegebenheiten anpassen und bei Beschädigung einfach austauschen.

Um sicherzustellen, daß die Emissionsfrequenz der Laserdiode nicht durch unkontrollierbare frequenzselektive Rückkopplungen, wie sie z.B. aus dem "Quasietalon" zwischen der Außenfläche des Laserdiodenresonators und der ersten Spiegelfläche des Etalons 41 auftreten, in unerwünschter Weise beeinflußt wird, ist günstigerweise vorgesehen, daß zwischen der Laserdiode 2 und dem Etalon 41 eine Lichtleitfaser 53 angeordnet ist, deren optische Länge mindestens einen Meter beträgt.

Aus ähnlichen Überlegungen ist zwischen der Laserdiode 2 und dem Interferometerkopf 1 eine Lichtleitfaser 32 angeordnet, deren optische Länge mindestens einen Meter beträgt.

Die monomode Lichtleitfaser 32, über die Laserlicht dem Interferometerkopf zugeführt wird, und vier Kunststoff-Lichtleitfasern 33a - d, über die optische Interferenzsignale aus den Lichtleitfasern 21a - d den Photodetektoren 24a - d zugeführt werden, sind in einem von einem Mantel 36 umgebenen Kabel zusammengefaßt. Das Faserkabel 35 ist am lichtquellenseitigen Ende über einen zweiteiligen Mehrfachfaserverbinder 37 lösbar mit Lichtleitfasern im Lichtquellen- und Auswertgehäuse 27 verbunden. Im einzelnen ist die von der Laserdiode kommende Lichtleitfaser 38 mit der monomoden Glasfaser 33 lösbar verbunden. Die vier Kunststoff-Lichtleitfasern 33a - d des Faserkabels 35 sind über den Stecker 37 mit Lichtleitfasern verbunden, die zu den Photodetektoren 24a - d führen.

Am interferometerkopfseitigen Ende des Faserkabels 35 ist ein zweiter Faserverbinder 40 zur lösbaren Verbindung der Lichtleitfasern des Faserkabels 35 mit entsprechenden Fasern im Interferometerkopf herzustellen. Im einzelnen wird über den Stecker 40 die monomode Glasfaser 32 mit der monomoden Glasfaser 6 verbunden. Außerdem erfolgt eine optische Kopplung der Lichtleitfasern 21 a - d mit den Lichtleitfasern 33a - d des Faserkabels 35. Das Faserkabel 35 läßt sich unter Beachtung der optischen Mindestlänge an die jeweiligen Einsatzbedingungen einfach anpassen, ist leicht verlegbar und kann bei Beschädigungen einfach und rasch ausgetauscht werden. Dieser Austausch kann sogar vom Benutzer vorgenommen werden, da eine aufwendige Justage im Anschluß an den Austausch nicht nötig ist.

In Fig. 2 ist ein Ausführungsbeispiel eines kollinear beleuchteten Etalons 41 dargestellt, das an eine Licht aus der Laserlichtquelle führende Glasfaser 46 angeschlossen ist, deren Länge wie bei dem in Fig. 1 dargestellten Ausführungsbeispiel zumindest ausreicht, um das Etalon in der Nähe der Meßstrecke anzuordnen.

Um bei Änderungen im Medium, welche das Etalon 41 umgibt, möglichst rasch wieder gleiche Bedingungen auf der Meßstrecke und im Etalon 41 herzustellen, weist das Etalon 41 zwei Öffnungen 44 und 85 auf, durch welche eine vom Ventilator 86 erzeugte Strömung fließen kann. Während des Meßvorganges wird diese Störung abgestellt.

Das in Fig. 2 dargestellte Etalon weist eine als Gradientenindexlinse ausgebildete Kollimationslinse 59 auf, an die das Ende der Glasfaser 46 mittels einer Haltevorrichtung in genau justierter Weise angeschlossen ist. Die ebene Austrittsfläche der Gradientenindexlinse 49 ist günstigerweise verspiegelt und bildet eine der beiden teilreflektierenden Reflexionsflächen 42 bzw. 43 des Etalons 41. Ein mit Öffnungen 44 versehener Zerodurring 45 hält die beiden Reflexionsflächen 42 und 43 in wohldefiniertem bekanntem Abstand. Die in der Amplitude des durch die teilreflektierende Reflexionsfläche 43 hindurchtretenden Lichtes enthaltene Information über die im Etalon herrschenden Umweltbedingungen wird über einen Photodetektor 60 erfaßt, der über eine elektrische Leitung 52 an eine Regel- bzw. Auswerteinrichtung angeschlossen ist.

Um von Intensitätsschwankungen der Laserlichtquelle unabhängig zu sein, ist es günstig, auch deren Intensität zu erfassen und das Interferenzsignal aus dem Etalon 41 in Relation zu diesem Referenzsignal zu bewerten. Mit dem im Fig. 3 dargestellten Ausführungsbeispiel ist dies möglich. Ein X-Faserkoppler 61 ist mit seinem ersten Anschluß 61a an eine Licht aus der Laserlichtquelle führende Lichtleitfaser 62 angeschlossen. Das dem Faserkoppler 61 zugeführte Licht wird auf die an seinem zweiten Anschluß 61b angeschlossene Lichtleitfaser 46 und die an seinem dritten Anschluß 61c angeschlossene Lichtleitfaser 63 aufgeteilt. Die Lichtleitfaser 63 führt zu einem Photodetektor 64, der über die Leitung 65 ein von der Lichtintensität der Laserlichtquelle abhängiges elektrisches Referenzsignal abgibt. Das aus dem Etalon 41 stammende Interferenzsignal wird in die Lichtleitfaser 46 zurückgekoppelt und gelangt über den vierten Ausgang 61d des Faserkopplers 61 in die Lichtleitfaser 66 und von dort auf den Photodetektor 67, der über die Leitung 68 ein elektrisches Interferenzsignal abgibt, das zusammen mit dem auf der Leitung 65 anstehenden elektrischen Signal in einer nicht dargestellten elektronischen Auswertschaltung bzw. Regelschaltung für die Laserlichtquelle ausgewertet wird. Das Rückkopplungssignal aus dem Etalon 41 gelangt über die Lichtleitfaser 62 als ein von den Umweltbedingungen abhängiges frequenzselektives Rückkopplungssignal zurück zur Laserlichtquelle.

Um die Genauigkeit bei der Erfassung des Interferenzmusters zu erhöhen, können zwei oder mehrere Etalons verschiedener Länge vorgesehen sein, die ausgehend vom kürzesten Etalon eine sukzessive Präzisierung der Interferenzsignalinformation erlauben.

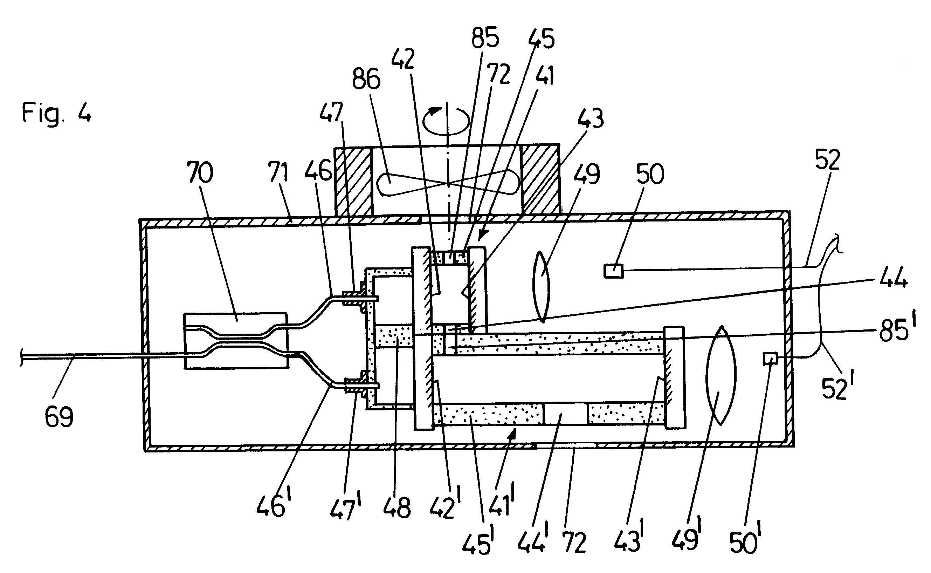

Bei dem in Fig. 4 dargestellten Ausführungsbeispiel sind zwei verschieden lange Etalons 41 und 41' vorgesehen, die im Prinzip so aufgebaut sind wie das in Fig. 1 dargestellte Etalon. Das über die Glasfaser 69 zugeführte Licht wird in einem Strahlteiler 70 auf die Lichtleitfasern 46 und 46' aufgeteilt. Das kürzere Etalon weist zwei von einem mit Öffnungen 44 versehenen Abstandsring 45 gehaltene teilreflektierende Reflexionsflächen 42 und 43 auf. Das Ende der monomoden Glasfaser 46 wird von einem an einem Abstandhalter 48 montierten Halteteil 47 gehalten, der die Glasfaser auf einen Teil ihrer Länge umgibt. In der Brennebene der in nicht dargestellter Weise gehaltenen Linse 49 entsteht ein Interferenzringsystem, das vom Photodetektor 50 erfaßt wird.

Das längere Etalon 41' ist im Prinzip gleich aufgebaut wie das kürzere Etalon 41, die entsprechenden Bauteile tragen daher dieselben, jedoch mit einem Strich versehenen Bezugsziffern wie die für das Etalon 41 verwendeten.

Das in Fig. 4 gezeigte Stufenetalon ist in einem Gehäuse 71 untergebracht, das Öffnungen 72 und 72' aufweist, die ein Kommunizieren der Etaloninnenräume mit der Umgebungsluft erlauben.

Dies wird erleichtert, wenn ein Ventilator 86 eine Strömung mit dem Verlauf 72-44'-85'-44-85-73 erzeugt.

Durch den interferometrischen Vergleich mit einer nominell statischen Maßverkörperung (Etalon) ist man in der Lage, die Einflüsse der Umwelt auf die Brechzahl der Luft zu erfassen bzw. zu kompensieren. Allerdings läßt sich ein vollkommen statisches Etalon nur schwer verwirklichen, da die Länge dieses Längennormals (des Abstandhalters im Luftspaltetalon) selbst von den Einflüssen der Umwelt, insbesondere von der Temperatur abhängt. Durch Verwendung geeigneter Materialien wie spezielle Glaskeramiken mit sehr geringem Wärmeausdehnungskohäfizienten läßt sich der Effekt des Umwelteinflußes auf das Etalon kleiner als 10⁻⁶ halten. Während diese, sich hauptsächlich aus der Temperaturabhängigkeit des Etalons erklärende verbleibende Ungenauigkeit für kurze Meßstrecken noch tolerierbar ist, kann diese Ungenauigkeit bei Meßstrecken im Bereich von Metern bereits zu groß sein.

Der naheliegende Gedanke, die Temperatur des Etalons zu stabilisieren, so wie es z.B. bei frequenzstabilen Argon-Ionen-Lasern gemacht wird, führt hier nicht weiter, denn dann wäre die Temperatur der Luft im Etalon und auf der eigentlichen Meßstrecke nicht gleich, damit wäre auch die Wellenlänge nicht gleich und die Messung würde verfälscht sein.

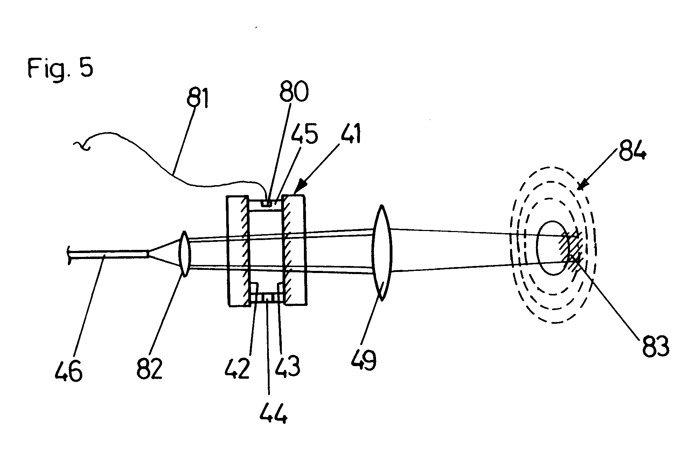

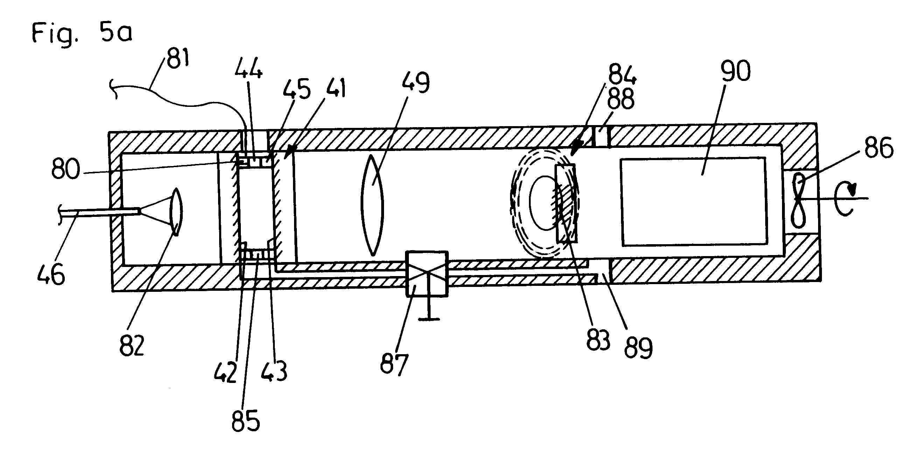

Eine Verbesserung in der Meßgenauigkeit läßt sich nun dadurch erreichen, daß man die Forderung nach der absoluten Stabilität des Längennormals (Etalon) fallenläßt und einfach die Temperatur des Etalons, genauer des Abstandhalters der beiden Reflexionsflächen 42 und 43 mißt. Dazu kann, wie in Fig. 5 dargestellt, in einer Bohrung des Abstandringes 45 ein Temperatursensor 8o angeordnet sein. Aus der bekannten Abhängigkeit der Etalonlänge von der Temperatur läßt sich dann das Ergebnis der Längenmessung korrigieren. Bei diesem Verfahren zur Erhöhung der Meßgenauigkeit kommt es weniger auf einen geringen Ausdehnungskoeffizienten des verwendeten Materials für den Abstandhalter im Etalon an, als vielmehr auf einen bekannten Längenausdehnungskoeffizienten. Es lassen sich daher auch kostengünstigere Materialien mit höheren Wärmeausdehnungskoeffizienten verwenden. Zur Messung der Temperatur eignen sich insbesondere Quarz-Temperatur-Sensoren 80, die über Leitungen 81 in einen elektrischen Oszillatorkreis eingebaut sind, dessen temperaturabhängige Resonanzfrequenz erfaßt wird. Günstig sind insbesondere Stimmgabel-Quarzschwinger, welche eine starke und nahezu lineare Frequez-Temperaturcharakteristik aufweisen. Diese Quarzschwinger lassen sich mit einer einfachen Oszillatorschaltung ansteuern. Wesentliche Eigenschaften eines solchen Temperaturmeßsystems sind eine geringe Leistungsaufnahme, eine gute Langzeitstabilität und kleine Abmessungen.

Bei der Längenmessung an Werkstücken eines bestimmten Materials bestünde eine Möglichkeit, die thermische Ausdehnung des Etalons zu kompensieren, auch darin, den Abstandhalter des Etalons aus demselben Material wie das Werkstück herzustellen. Dann braucht man die thermische Ausdehnung des Werkstückes nicht herauszurechnen, vielmehr wird diese automatisch kompensiert, da die temperaturbedingte relative Längenänderung des Werkstückes und des Etalons bei gleicher Temperatur gleich ist.

Gegenüber der in Fig. 1 dargestellten Etalonanordnung unterscheidet sich die in Fig. 5 schematisch dargestellte Etalonanordnung noch dadurch, daß zwischen dem Ende der monomoden Glasfaser 46 und dem Etalon 41 eine Linse angeordnet ist, die die Divergenz des aus der Glasfaser 46 austretenden Lichtes verkleinert und das ganze Licht auf einen außermittigen Teil (schraffierter Bereich 83) des Ringsystems konzentriert. Das nach der Linse 82 nahezu kollineare Lichtstrahlenbündel tritt dabei unter einem kleinen Winkel zum Lot auf die beiden Reflexionsflächen 42 und 43 (also leicht schräg) ins Etalon 41 ein. Im Gegensatz zu einer vollkommen divergenten Beleuchtung des Etalons, bei dem man ein Ringsystem erhält, wie es mit strichlierten Kreisen 84 angedeutet ist, erzielt man durch die Anordnung in Fig. 5 eine erhöhte Lichtintensität im Bereich 83, in dem dann eine in Fig. 5 nicht dargestellte Differentialphotodiode angeordnet sein kann. Durch diese bei nahezu kollinear beleuchtetem Etalon erzielte lokale Intensitätserhöhung ist eine sichere und zuverlässige Erfassung der Lage des transversalen Interferenzmusters durch die Differentialphotodiode möglich.

Bei der gekapselten Anordnung der Einrichtung nach Fig. 5, welche in Fig. 5a dargestellt ist, dient der Ventilator 86 nicht nur zum Ausgleich von Luftschwankungen, sondern auch zur Kühlung eines Schaltungsteiles 90. Um ein Anlassen und Abstellen des Ventilators 86 bei jedem Meßvorgang zu vermeiden, unterbricht man die Luftströmung durch das Etalon 41 lediglich durch ein Magnetventil 87 während dem weiterlaufenden Ventilator 86 Luft durch die Öffnungen 88 und 89 zugeführt wird.

Bei den gezeigten Ausführungsbeispielen wird das aus dem bzw. den Etalon(en) gewonnene Interferenzsignal dazu verwendet, um in Abhängigkeit von den Umweltbedingungen die Frequenz der Lichtquelle gerade so zu verstellen, daß die Luftwellenlänge konstant bleibt. Diese Konstanthaltung der Luftwellenlänge vereinfacht die "Ablesung" der aus dem Etalon stammenden Interferenzsignale. Grundsätzlich ist es jedoch auch möglich, die Luftwellenlänge bzw. Brechzahl des Umgebungsmediums, beispielsweise über ein hinter dem durchstrahlten Etalon angeordneten Diodenfeld laufend zu erfassen und dann in einer elektronischen Auswertschaltung rechnerisch zu kompensieren.

Die Erfindung ist nicht auf die konstruktiven Lösungen der dargestellten Ausführungsbeispiele beschränkt. Für den Aufbau des Etalons und des Anschlusses der Lichtleitfaser ans Etalon sind zahlreiche konstruktive Lösungen denkbar und möglich.

## Patentansprüche

1. Interferometeranordnung, insbesondere zur Entfernungs- bzw. Verschiebewegbestimmung eines beweglichen Bauteiles, mit einer Laserlichtquelle mit zumindest einem Strahlteiler zur Aufteilung von aus der Laserlichtquelle stammendem Licht in einen Meßstrahl und einen Referenzstrahl, mit einer Rekombinationseinrichtung;an der der über Referenzstrecke geführte Referenzstrahl und der eine teilweise in einem gasförmigen Umgebungsmedium verlaufende und über einen beweglichen Meßspiegel führende Meßstrecke durchlaufende Meßstrahl interferieren, und mit einer wenigstens einen Photodetektor aufweisenden Jetektoreinrichtung zur Analyse zumindest eines aus der Rekombinationseinrichtung stammenden optischen Interferenzsignals, dadurch gekennzeichnet, daß die Interferometeranordnung zur Erfassung bzw. Kompensation von variablen Umweltbedingungen mindestens ein statisches über einen Lichtwellenleiter mit Licht aus der Laserlichtquelle beleuchtetes Etalon bekannter Länge aufweist, dessen zwischen den Reflexionsflächen liegender Raumbereich mit dem Umgebungsmedium kommuniziert, wobei der Lichtwellenleiter, an den das bzw. die Etalon(e) (41 bzw. 41') angeschlossen ist bzw. sind, eine Licht aus der Laserlichtquelle (2) führende, flexible Lichtleitfaser (46 bzw. 46') ist.

2. Interferometeranordnung nach Anspruch 1, dadurch gekennzeichnet, daß jede an ein Etalon angeschlossene, flexible Lichtleitfaser (46,46') ein an sich bekannter Einmodenwellenleiter, vorzugsweise eine monomode Glasfaser ist.

3. Interferometeranordnung nach Anspruch 1 oder 2, dadurch gekennzeichnet, daß das dem Etalon (41) abgewandte Ende der Lichtleitfaser (46) über einen Faserverbinder (57) mit einer Licht aus der Lichtquelle (2) führenden Lichtleitfaser (53) lösbar verbunden ist.

4. Interferometeranordnung nach Anspruch 3, dadurch gekennzeichnet, daß zwischen der am Etalon (41) angeschlossenen Lichtleitfaser (46)und der Laserlichtquelle (2) eine weitere Lichtleitfaser (53) angeordnet ist, deren lichtquellenseitiges Ende über einen ersten Faserverbinder (56) einer von der Laserlichtquelle (2) kommenden Lichtleitfaser (55) lösbar verbunden ist und deren etalonseitiges Ende über einen zweiten Faserverbinder (57) mit der am Etalon (41) angeschlossenen Lichtleitfaser (46) lösbar verbunden ist.

5. Interferometeranordnung nach einem der Ansprüche 1 - 3, dadurch gekennzeichnet, daß die gesamte optische Länge der zwischen Etalon (41) und Lichtquelle (2) liegender Lichtleitfasern (55,53,46) mindestens 1 Meter, vorzugsweise mindestens 10 Meter beträgt.

6. Interferometeranordnung nach Anspruch 4 und 5,dadurch gekennzeichnet, daß die optische Länge der weiteren Lichtleitfaser (53) mindestens 1 Meter, vorzugsweise 10 Meter beträgt.

7. Interferometeranordnung nach einem der Ansprüche 1 - 4, dadurch gekennzeichnet, daß zwei oder mehrere offene Etalons (41,41') verschiedener Länge vorgesehen sind, die jeweils an eine flexible Lichtleitfaser (46 bzw. 46') angeschlossen sind.

8. Interferometeranordnung nach einem der Ansprüche 1 - 7, dadurch gekennzeichnet, daß das zum Etalon (41) weisende Faserende in einer vorzugsweise einstellbaren Haltevorrichtung (47) relativ zu den Reflexionsflächen (42,43) des Etalons (41) justiert ist.

9. Interferometeranordnung nach einem der Ansprüche 1 - 8, dadurch gekennzeichnet, daß die das Etalon (41) beleuchtende, vorzugsweise monomode Lichtleitfaser (46) in einem festen bzw. fest einstellbaren Abstand vor der einen Reflexionsfläche (42) des Etalons endet, wobei der divergent aus der Lichtleitfaser (46) austretende Lichtkegel das Etalon (41) beleuchtet.

10. Interferometeranordnung nach Anspruch 9, dadurch gekennzeichnet, daß hinter der anderen Reflexionsfläche (43) eine Sammellinse (49) angeordnet ist, in deren Brennebene, vorzugsweise radial außerhalb der optischen Achse, eine das Interferenzringsystem erfassende Photodetektoreinheit (50) angeordnet ist.

11. Interferometeranordnung nach Anspruch 10, dadurch gekennzeichnet, daß die Photodetektoreinheit eine Differentialphotodiode (50) ist.

12. Interferometeranordnung nach einem der Ansprüche 9-11, dadurch gekennzeichnet, daß zwischen Lichtleitfaser (46) und Etalon eine die Divergenz des aus der Lichtleitfaser (46) austretenden Lichtkegels verringernde Linse (82) angeordnet ist, und das nahezu kollineare Lichtstrahlenbündel nach der Linse (82) unter einem Winkel zum Lot auf die beiden Reflexionsflächen (42,43) des Etalons (41) ins Etalon (41) einfällt.

13. Interferometeranordnung nach einem der Ansprüche 1 - 8, dadurch gekennzeichnet, daß zwischen dem etalonseitigen Ende der Lichtleitfaser (46) und der einen (42) der beiden Reflexionsflächen (42,43) des Etalons (41) eine Kollimationslinse (59) angeordnet ist, aus der die Lichtstrahlen parallel zueinander und senkrecht auf die parallelen Reflexionsflächen (42,43) in den zwischen diesen liegenden Raumbereich des Etalons (41) eintreten.

14. Interferometeranordnung nach Anspruch 13, dadurch gekennzeichnet, daß die Kollimationslinse eine Gradientenindexlinse (59) ist, deren eine ebene Fläche verspiegelt ist und die eine Reflexionsfläche (42) des Etalons bildet.

15. Interferometeranordnung nach Anspruch 13 oder 14, dadurch gekennzeichnet, daß hinter der zweiten Reflexionsfläche (43) ein Photodetektor (60) angeordnet ist, der das vom Etalon (41) transmittierte Interferenzsignal erfaßt.

16. Interferometeranordnung nach Anspruch 13 oder 14, dadurch gekennzeichnet, daß vor dem Etalon (41) und der Kollimationslinse (59) ein X-Faserkoppler (61) angeordnet ist, dessen erster Anschluß (61a) an eine Licht aus der Laserlichtquelle (2) führende Lichtleitfaser (62) angeschlossen ist, dessen gegenüberliegender zweiter Anschluß (61b) mit der zum Etalon (41) führenden Lichtfaser (46) verbunden ist, dessen dritter, neben diesem zweiten Anschluß liegender Anschluß (41c) mit einer zu einem ersten Photodetektor (64) führenden Lichtleitfaser (63) verbunden ist und dessen vierter, neben dem ersten Anschluß liegender Anschluß (61d) an eine zu einem zweiten Photodetektor (67) führende Lichtleitfaser (66) angeschlossen ist.

17. Interferometeranordnung nach einem der Anspruch 1 bis 16, dadurch gekennzeichnet, daß die Frequenz der Laserlichtquelle (2) in Abhängigkeit von der Brechzahl zahl des zwischen den Reflexionsflächen (42,43 bzw. 42',43') des Etalons (41) bzw. der Etalone (41,41') befindlichen Umgebungsmediums derart verändert wird, daß die im Umgebungsmedium vorhandene Wellenlänge konstant bleibt, wobei die Laserlichtquelle eine Laserdiode
(2) ist, in deren Laserresonator Licht aus wenigstens einem Etalon (41) in Abhängigkeit von der Brechzahl des zwischen den Reflexionsflächen (42, 43 bzw. 42', 43') des Etalons (41) bzw. der Etalone (41, 41') befindlichen Umgebungsmediums frequenzselektiv zurückgekoppelt wird.

18. Interferometeranordnung nach einem der Ansprüche 1 - 17, dadurch gekennzeichnet, daß das Etalon einen Temperatursensor (80) zur Erfassung der Temperatur des Abstandhalters (45) der beiden Reflexionsflächen (42, 43) aufweist.

19. Interferometeranordnung nach Anspruch 18, dadurch gekennzeichnet, daß der Temperatursensor in eine Bohrung im Abstandhalter (45) eingesetzt ist.

20. Interferometeranordnung nach Anspruch 18 oder 19, dadurch gekennzeichnet, daß der Temperatursensor ein in einem elektrischen Oszillatorkreis angeordneter Quarzschwinger-Temperatursensor, insbesondere ein Stimmgabel-Quarzschwinger (45) ist.

21. Interferometeranordnung nach einem der vorangehenden Ansprüche, dadurch gekennzeichnet, daß eine Einrichtung zum Austausch des gasförmigen Mediums im Etalon bzw. den Etalonen (41 bzw. 41') vorgesehen ist.

22. Interferometeranordnung nach Ansrpuch 21, dadurch gekennzeichnet, daß jedes Etalon (41 bzs. 41') mit zwei Öffnungen (44 bzw. 44' und 85 bzw. 85') versehen ist und ein Ventilator (85) eine Strömung durch das Etalon bzw. die Etalone (41 bzw. 41') erzeugt.

23. Interferometeranordnung nach Anspruch 22, dadurch gekennzeichnet, daß der Ventilator (86) während den Messungen abschaltbar ist.

24. Interferometeranordnung nach Anspruch 22, dadurch gekennzeichnet, daß bei laufendem Ventilator (86) die Strömung durch das Etalon bzw. die Etalone (41 bzw. 41') absperrbar ist (Fig. 5a).

## Claims

1. Interferometer system, particularly for determining the distance or displacement of a moveable part, comprising a laser light source, at least one beam splitter to divide light provided by the laser light source into a measuring beam and a reference beam, recombination means at which the reference beam being guided along a reference path and the measuring beam interfere, the measuring beam travelling along a measuring path that leads over a moveable measuring reflector and partly through a gaseous ambient medium, and a detector means comprising at least one photodetector to analyze at least one optical interference signal provided by the recombination means, characterized in that the interferometer system comprises at least one static etalon of a known length to determine or componsate for variable environmental conditions of the ambient medium, the etalon being illuminated via an optical waveguide with light stemming from the laser light source and comprising two reflection surfaces, the space lying inbetween these reflection surfaces communicating with the ambient medium, the waveguide to which the etalon(s) (41, 41') is (are) connected being a flexible optical fibre (46, 46') conveying light from the laser light source (2).

2. Interferometer system according to claim 1, characterized in that each flexible optical fibre (46, 46') connected to an etalon is a single mode wave guide, preferably a monomode glass fibre.

3. Interferometer system according to claim 1 or 2, characterized in that the optical fibre (46) is releasably connected at its end remote from the etalon (41) by means of a fibre coupler (57) to an optical fibre (53) conveying light from the laser light source.

4. Interferometer system according to claim 3, characterized in that a further optical fibre (53) is arranged between the laser light source (2) and the optical fibre (46) connected to the etalon (41), the light source end of that further optical fibre (53) releasably connected to an optical fibre (55) conveying light from the laser light source (2) by means of a first fibre connector (56), and the etalon end of that further optical fibre (53) releasably connected to said optical fibre (46) connected to the etalon by means of a second fibre connector (57).

5. Interferometer system according to any of claims 1 to 3, characterized in that the overall optical length of the optical fibre(s) (55, 53, 46) lying between the laser light source (2) and the etalon (41) is at least one meter, preferably at least 10 meters.

6. Interferometer system according to claim 4 and 5, characterized in that the optical length of said further optical fibre (53) is at least one meter, preferably at least 10 meters.

7. Interferometer system according to any of claims 1 to 4, characterized by two or more open etalons (41, 41') of different lengths, which are each connected to a flexible optical fibre (46, 46').

8. Interferometer system according to any of claims 1 to 7, characterized in that the etalon (41) end of the optical fibre is adjusted by a holding means (47) with respect to the reflection surfaces (42, 43) of the etalon (41).

9. Interferometer system according to any of claims 1 to 8, characterized in that the optical, preferably monomode fibre (46) illuminating the etalon (41) ends at a fixed of fixedly adjustable distance from one of the reflection surfaces (42) of the etalon, the divergent light cone emerging from the optical fibre (46) illuminating the etalon (41).

10. Interferometer system according to claim 9, characterized in that a condenser lens (49) is arranged behind the other reflection surface (43), a photodetector unit (50) measuring the system of interference rings being arranged in the focal plane of said condenser lens and preferably radially outside the optical axis.

11. Interferometer system according to claim 10, characterized in that the photodetector unit (50) is a differential diode.

12. Interferometer system accordring to any of claims 9 to 11, characterized in that a lens (82) reducing the divergence of the light cone emerging from the optical fibre (46) is arranged between the etalon and the optical fibre (46), and that the almost collinear light beam behind the lens (82) enters the etalon (41) and forms an angle with respect to a normal to the two reflection surfaces (42, 43) of the etalon (41).

13. Interferometer system according to any of claims 1 to 8, characterized in that a collimator lens (59) is arranged between the etalon end of the optical fibre (46) and one (42) of the two reflection surfaces (42, 43) of the etalon (41), the light rays entering the space between the parallel reflection surfaces (42, 43) of the etalon (41) being parallel with respect to one another and normal to said reflection surfaces.

14. Interferometer system according to claim 13, characterized in that the collimator lens is a gradient index lens (59) having a mirror-coated plane surface that forms one reflection surface (42) of the etalon.

15. Interferometer system according to claim 13 or 14, characterized in that a photodetector (60) measuring the interference signal supplied by the etalon is arranged behind the other (43) of the two reflection surfaces of the etalon (41).

16. Interferometer system according to claim 13 or 14, characterized in that a X-fibre-coupler (61) having four terminals is arranged in front of the etalon (41) and the collimator lens (59), the first terminal (61a) being connected to an optical fibre (62) conveying light from the laser light source (2), the opposite second terminal being (61b) connected to the optical fibre (46) leading to the etalon (41), the third terminal (61c) lying adjacent to said second terminal and being connected to an optical fibre (63) leading to a first photodetector (64), and the fourth terminal (61d) lying adjacent to said first terminal and being connected to an optical fibre (66) leading to a second photodetecor (67).

17. Interferometer system according to any of claim 1 to 16, characterized in that the frequency of the laser light source (2) is varied depending on the refractive index of the ambient medium being present between the reflection surfaces (42, 43 or 42', 43') of the etalon (41) or of the etalons (41, 41'), so that the wavelength in the ambient medium remains constant, the laser light source being a laser diode (2), light being frequency selectively feed back into the laser resonator from at least one etalon (41), the preferred feed back frequency depending on the refractive index of the ambient medium being present between the two reflection surfaces (42, 43 or 42', 43') of the etalon (41) or etalons (41, 41').

18. Interferometer system according to any of claims 1 to 17, characterized in that the etalon further comprises a temperature sensor (80) to measure the temperature of the spacer between the two reflection surfaces (42, 43) of the etalon.

19. Interferometer system according to claim 18, characterized in that the temperature sensor is placed into a bore in the spacer (45).

20. Interferometer system according to claim 18 or 19, characterized in that the temperature sensor is a quartz oscillator temperature sensor, preferably a tuning-fork quartz oscillator.

21. Interferometer system according to any of the preceding claims, characterized by means for the exchange of the gaseous medium in the etalon or etalons (41, 41').

22. Interferometer system according to claim 21, characterized in that each etalon (41, 41') is provided with two openings (44, 44' and 85, 85'), and a ventilator (85) causes a flow through the etalon or etalons (41, 41').

23. Interferometer system according to claim 22, characterized in that the ventilator (86) can be switched off during the actual measurements.

24. Interferometer system according to claim 22, characterized in that the flow through the etalon or etalons (41, 41') can be shut off with the ventilator (86) running (Fig. 5a).

## Revendications

1. Dispositif interférométrique, en particulier pour déterminer respectivement l'éloignement ou la course de déplacement d'une pièce structurelle mobile, comprenant une source de lumière laser munie d'au moins un diviseur de rayonnements pour scinder une lumière, émanant de la source de lumière laser, en un rayonnement mesureur et en un rayonnement de référence ; un dispositif de recombinaison, sur lequel interfèrent le rayonnement de référence guidé sur un trajet de référence, ainsi que le rayonnement mesureur parcourant un trajet de mesure qui s'étend partiellement dans un agent gazeux environnant, et passe par un miroir mesureur mobile ; et un dispositif de détection comportant au moins un photodétecteur, en vue de l'analyse d'au moins un signal optique d'interférence provenant du dispositif de recombinaison, caractérisé par le fait que le dispositif interférométrique présente, respectivement en vue de la détection ou de la compensation de conditions d'environnement variables, au moins un étalon statique de longueur connue qui est éclairé, par l'intermédiaire d'un guide d'ondes lumineuses, par de la lumière émanant de la source de lumière laser, et dont la région spatiale située entre les surfaces réflectrices communique avec l'agent environnant, le guide d'ondes lumineuses, auquel l'(les) étalon(s) (41, respectivement 41') est (sont) raccordé(s), étant une fibre optique flexible (46, respectivement 46') guidant la lumière émanant de la source (2) de lumière laser.

2. Dispositif interférométrique selon la revendication 1, caractérisé par le fait que chaque fibre optique flexible (46, 46') raccordée à un étalon est un guide d'ondes monomode connu par lui-même, de préférence une fibre de verre monomode.

3. Dispositif interférométrique selon la revendication 1 ou 2, caractérisé par le fait que l'extrémité de la fibre optique (46), tournée à l'opposé de l'étalon (41), est reliée de manière libérable, par l'intermédiaire d'un connecteur de fibres (57), à une fibre optique (53) guidant la lumière émanant de la source de lumière (2).

4. Dispositif interférométrique selon la revendication 3, caractérisé par le fait que, entre la fibre optique (46) raccordée à l'étalon (41) et la source (2) de lumière laser, se trouve une fibre optique supplémentaire (53) dont l'extrémité située côté source lumineuse est reliée de manière libérable, par l'intermédiaire d'un premier connecteur de fibres (56), à une fibre optique (55) provenant de ladite source (2) de lumière laser, et dont l'extrémité située côté étalon est reliée de manière libérable, par l'intermédiaire d'un second connecteur de fibres (57), à la fibre optique (46) raccordée à l'étalon (41).

5. Dispositif interférométrique selon l'une des revendications 1-3, caractérisé par le fait que la longueur optique totale des fibres optiques (55, 53, 46) situées entre l'étalon (41) et la source de lumière (2) mesure au moins 1 mètre, de préférence au moins 10 mètres.

6. Dispositif interférométrique selon les revendications 4 et 5, caractérisé par le fait que la longueur optique de la fibre optique supplémentaire (53) mesure au moins 1 mètre, de préférence 10 mètres.

7. Dispositif interférométrique selon l'une des revendications 1-4, caractérisé par la présence de deux ou plusieurs étalons ouverts (41, 41') de longueurs différentes, qui sont respectivement raccordés à une fibre optique flexible (46, 46').

8. Dispositif interférométrique selon l'une des revendications 1-7, caractérisé par le fait que l'extrémité de la fibre qui est tournée vers l'étalon (41) est ajustée, dans un dispositif de retenue (47) préférentiellement réglable, par rapport aux surfaces réflectrices (42, 43) de l'étalon (41).

9. Dispositif interférométrique selon l'une des revendications 1-8, caractérisé par le fait que la fibre optique (46) préférentiellement monomode, qui éclaire l'étalon (41), s'achève à une distance respectivement fixe, ou réglable de manière fixe, devant l'une (42) des surfaces réflectrices de l'étalon, cet étalon (41) étant éclairé par le cône de lumière sortant de la fibre optique (46) avec divergence.

10. Dispositif interférométrique selon la revendication 9, caractérisé par le fait qu'une lentille collectrice (49) se trouve derrière l'autre surface réflectrice (43), lentille dans le plan focal de laquelle est disposée, de préférence radialement à l'extérieur de l'axe optique, une unité photodétectrice (50) qui capte le système annulaire interférentiel.

11. Dispositif interférométrique selon la revendication 10, caractérisé par le fait que l'unité photodétectrice est une photodiode différentielle (50).

12. Dispositif interférométrique selon l'une des revendications 9-11, caractérisé par le fait qu'une lentille (82), diminuant la divergence du cône de lumière sortant de la fibre optique (46), est interposée entre cette fibre optique (46) et l'étalon, le faisceau de rayonnements lumineux approximativement collinéaire venant incider sur l'étalon (41), après la lentille (82), en décrivant un angle par rapport à la perpendiculaire aux deux surfaces réflectrices (42, 43) de l'étalon (41).

13. Dispositif interférométrique selon l'une des revendications 1-8, caractérisé par le fait qu'une lentille de collimation (59) est interposée entre l'extrémité de la fibre optique (46) qui est située côté étalon, et l'une (42) des deux surfaces réflectrices (42, 43) de l'étalon (41), lentille à partir de laquelle les rayonnements lumineux pénètrent, parallèlement les uns aux autres et perpendiculairement aux surfaces réflectrices parallèles (42, 43), dans la région spatiale de l'étalon (41) située entre lesdites surfaces.

14. Dispositif interférométrique selon la revendication 13, caractérisé par le fait que la lentille de collimation est une lentille (59) à gradient d'index, dont une surface plane est métallisée et forme l'une (42) des surfaces réflectrices de l'étalon.

15. Dispositif interférométrique selon la revendication 13 ou 14, caractérisé par le fait qu'un photodétecteur (60), installé derrière la seconde surface réflectrice (43), capte le signal d'interférence transmis par l'étalon (41).

16. Dispositif interférométrique selon la revendication 13 ou 14, caractérisé par le fait qu'un coupleur de fibres (61) en X est installé devant l'étalon (41) et la lentille de collimation (59), coupleur dont le premier raccord (61a) est relié à une fibre optique (62) guidant une lumière émanant de la source (2) de lumière laser ; dont le deuxième raccord opposé (61b) est relié à la fibre optique (46) rejoignant l'étalon (41) ; dont le troisième raccord (61c) situé à côté de ce deuxième raccord, est relié à une fibre optique (63) rejoignant un premier photodétecteur (64) ; et dont le quatrième raccord (61d), situé à côté du premier raccord, est relié à une fibre optique (66) rejoignant un second photodétecteur (67).

17. Dispositif interférométrique selon l'une des revendications 1 à 16, caractérisé par le fait que la fréquence de la source (2) de lumière laser est modifiée, en fonction de l'indice de réfraction de l'agent environnant interposé entre les surfaces réflectrices (42, 43, respectivement 42', 43') de l'étalon (41) ou des étalons (41, 41'), de telle sorte que la longueur d'ondes à l'intérieur de l'agent environnant demeure constante, la source de lumière laser étant une diode laser (2) dans le résonateur laser de laquelle de la lumière émanant d'au moins un étalon (41) est rétrocouplée, en mode sélectif en fréquence, en fonction de l'indice de réfraction de l'agent environnant interposé entre les surfaces réflectrices (42, 43, respectivement 42', 43') de l'étalon (41) ou des étalons (41, 41').

18. Dispositif interférométrique selon l'une des revendications 1-17, caractérisé par le fait que l'étalon présente une sonde thermométrique (80) pour détecter la température de l'élément d'espacement (45) des deux surfaces réflectrices (42, 43).

19. Dispositif interférométrique selon la revendication 18, caractérisé par le fait que la sonde thermométrique est intégrée dans un perçage pratiqué dans l'élément d'espacement (45).

20. Dispositif interférométrique selon la revendication 18 ou 19, caractérisé par le fait que la sonde thermométrique est une sonde thermométrique à oscillateur piézo-électrique, branchée dans un circuit électrique oscillant, en particulier un oscillateur piézoélectrique (45) à diapason.

21. Dispositif interférométrique selon l'une des revendications précédentes, caractérisé par le fait qu'un dispositif est respectivement prévu, dans l'étalon ou les étalons (41, respectivement 41'), pour l'échange de l'agent gazeux.

22. Dispositif interférométrique selon la revendication 21, caractérisé par le fait que chaque étalon (41, respectivement 41') est percé de deux orifices (44, respectivement 44' et 85, respectivement 85'), et un ventilateur (86) engendre respectivement une circulation à travers l'étalon ou les étalons (41, respectivement 41').

23. Dispositif interférométrique selon la revendication 22, caractérisé par le fait que le ventilateur (86) peut être mis hors fonction au cours des mesurages.

24. Dispositif interférométrique selon la revendication 22, caractérisé par le fait que la circulation, traversant respectivement l'étalon ou les étalons (41, respectivement 41'), peut être bloquée lorsque le ventilateur (86) est en fonction (figure 5a).
